# EUROPÄISCHE PATENTSCHRIFT

(11) **EP 3 760 313 B1**
(45) Veröffentlichungstag und Bekanntmachung des Hinweises auf die Patenterteilung: **30.03.2022**
(21) Anmeldenummer: 20182772.2
(22) Anmeldetag: 29.06.2020
(51) Int. Cl.: B02C 21/02, B02C 23/02, B07B 1/00, B07B 13/16

(54) **AUFGABETRICHTER FÜR EINE MATERIALBEARBEITUNGSEINRICHTUNG**
FEEDING HOPPER FOR A MATERIAL PROCESSING DEVICE
ENTONNOIR DE CHARGEMENT POUR UN DISPOSITIF DE TRAITEMENT DE MATÉRIAUX

(30) Priorität: 04.07.2019 DE 102019118058
(43) Veröffentlichungstag der Anmeldung: 06.01.2021
(73) Patentinhaber: Kleemann GmbH, 73037 Göppingen (DE)
(72) Erfinder: KÖPF, Reiner, 73333 Gingen an der Fils (DE); KNOBLICH, Christian, 70178 Stuttgart (DE); BURGART, Elena, 72622 Nürtingen (DE)
(74) Vertreter: Herrmann, Jochen

(56) Entgegenhaltungen:
- DE-B3-102016 119 797

## Beschreibung

Die Erfindung betrifft einen Aufgabetrichter für eine Materialbearbeitungseinrichtung, insbesondere für eine Brechanlage, mit zwei Seitenwänden und einer Trichterrückwand, wobei die Seitenwände mittelbar oder unmittelbar an einem Maschinenträger schwenkbar angekoppelt und zwischen einer aufgestellten Arbeitsposition und einer abgeklappten Transportposition verstellbar sind, wobei zwischen den Seitenwänden ein Material-Aufgabebereich gebildet ist, und wobei wenigstens eine der Seitenwände in der aufgestellten Arbeitsposition mittels einer Stützeinrichtung gegenüber dem Maschinenträger abgestützt ist,

Aus der EP 2 730 459 A2 ist eine Gesteins-Zerkleinerungsanlage mit einem Aufgabetrichter bekannt. Solche Aufgabetrichter werden in Materialbearbeitungseinrichtungen, beispielsweise Rotationsprallbrechern, Backenbrechern, Kegelbrecher oder auch in Siebanlagen eingesetzt. Dem Aufgabetrichter ist im Bereich der Unterseite des als Aufgabebereich ausgebildeten Trichterraums eine Transporteinrichtung, beispielsweise eine Förderinne oder ein Förderband zugeordnet. Über den Aufgabetrichter kann das zu zerkleinernde Material eingefüllt und auf die Transportvorrichtung aufgegeben werden. Üblicherweise werden die Aufgabetrichter mit Baggern, Radladern oder Zerkleinerungs- oder Siebanlagen beschickt.

Die Bauhöhe der Materialbearbeitungseinrichtung muss so dimensioniert sein, dass sie mit Tiefladern transportierbar sind. Mittels der abklappbaren Seitenwände lässt sich die Bauhöhe der Maschine reduzieren. Eine Aufrichthilfe wird zum Zwecke der Arbeitserleichterung eingesetzt, damit der Maschinenumbau einfach zu bewerkstelligen ist.

Bei der Aufrichthilfe gemäß der EP 2 730 459 A1 wird der Trichterraum von zwei Seitenwänden begrenzt, an die über ein erstes Schwenklager eine Wanderweiterung anscharniert ist. Die Aufrichthilfe weist als Aktuator einen Hydraulikzylinder auf, der schwenkbar an die Seitenwand angekoppelt ist. Weiterhin ist eine Stütze verwendet, die ebenfalls an die Seitenwand schwenkbar angeschlossen ist. Die Stütze ihrerseits ist über ein zweites Schwenklager schwenkbar mit einem Hebel verbunden. Der Hebel ist schwenkbar an die Wanderweiterung angekoppelt. Im Bereich zwischen den Koppelstellen des Hebels an die Wanderweiterung bzw. die Stütze greift der Aktuator mit seiner Kolbenstange an. Bei diesem Mechanismus fluchten die Gelenksachsen des ersten und des zweiten Schwenklagers in der abgeklappten Stellung der Wanderweiterung miteinander. Diese Gelenkzuordnung bleibt so lange erhalten, bis die Wanderweiterung ihre aufgerichtete Stellung erreicht. Um die aufgerichtete Stellung zu sichern muss der Hydraulikzylinder weiter teleskopiert werden, so dass sich die Gelenksachse des zweiten Schwenklagers gegenüber der Gelenksachse des ersten Schwenklagers verstellt. Diese Mechanik hat den Nachteil, dass es aufgrund von Fertigungstoleranzen nur sehr aufwendig möglich ist, die beiden Gelenksachsen des ersten und des zweiten Schwenklagers zueinander fluchtend anzuordnen. Daher müssen in der Getriebeanordnung Ausgleichsmechanismen vorgesehen sein, um die Funktionalität zu gewährleisten. Beispielsweise können im Bereich der Gelenkpunkte Langlöcher oder dergleichen vorgesehen sein. Solche Langlöcher oder andere Ausgleichsmechanismen haben allerdings den Nachteil, dass sie zu einem instabilen Bewegungsablauf führen. Bei der aus der EP 2 730 459 A2 bekannten Anordnung überfährt die Getriebeanordnung eine Totpunktlage, bei der die Wanderweiterung aufgrund der Ausgleichsmechanismen zumindest in einem Teilbereich der Schwenkbewegung eine unkontrollierte Bewegung ausführt. Weiterhin bedingt die bekannte Anordnung einen hohen Teile-und Montageaufwand.

Aus EP 2 949 397 B1 ist ein Aufgabetrichter für einen Gesteinsbrecher bekannt, der zwei klappbare Seitenwände und eine Trichterrückwand aufweist. Die Seitenwände können mit der Trichterrückwand in der aufgeklappten Betriebsstellung verriegelt werden. Zusätzlich können die Seitenwände mittels eines Hebelgetriebes gestützt werden. Für das Hebelgetriebe ist ein hoher Montage und Teileaufwand erforderlich. Eine ähnliche Bauweise wie EP 2 949 397 B1 offenbart auch GB 2496522 A. Bei dem aus dieser Schrift bekannten Aufgabetrichter sind wieder zweiteilige Seitenwände verwendet, die mit einer Wanderweiterung ausgestattet sind. Die Seitenwände lassen sich einheitlich, zusammen mit der aufgesteckten Wanderweiterung um eine horizontale Schwenkachse abklappen. In der aufgeklappten Stellung sichern Hebelgetriebe die Stellung der Seitenwand.

DE 10 2016 119 797 B3 offenbart einen Gesteinsbrecher mit einem Aufgabetrichter, der Seitenwände und eine Trichterrückwand aufweist. Die Seitenwände können mittels Hydraulikzylindern in ihre aufgeklappte Betriebsposition verstellt werden. In der aufgeklappten Stellung lassen sich die Seitenwände mittels Stützstreben sichern. Diese werden in dafür vorgesehene Befestigungsstellen an den Seitenwänden und dem Maschinenchassis befestigt.

Es ist Aufgabe der Erfindung, einen Aufgabetrichter der eingangs erwähnten Art bereitzustellen, der mit geringem Teile- und Montageaufwand eine effektive Sicherung der Seitenwand in der aufgeklappten Arbeitsposition ermöglicht und der in der abgeklappten Transportposition platzsparend untergebracht ist.

Diese Aufgabe wird dadurch gelöst,

Stützhebel in der abgeklappten Transportposition in den Material-Aufgabebereich vorsteht.

Der Stützhebel kann als einfaches Bauteil ausgeführt, und beispielsweise direkt an der Seitenwand befestigt werden. Hierdurch ergibt sich ein deutlich geringerer Teileaufwand als beim Stand der Technik, bei dem insbesondere aufwändige Hebelgetriebe Verwendung finden. In der aufgeklappten Betriebsposition stützt sich der Stützhebel mittels einer lösbaren Formschlussverbindung gegenüber dem Maschinenträger ab. Auf diese Weise wird die Betriebsposition der Seitenwand zuverlässig und einfach gesichert. Soll nun die Seitenwand in die Transportposition verbracht werden, so bietet die lösbare Formschlussverbindung dem Anwender eine komfortable Möglichkeit die Arretierung der Seitenwand zu lösen. Diese kann nun in die abgeklappte Transportposition verschwenkt werden. Hierbei ist dann der Stützhebel platzsparend untergebracht, in dem er in den zwischen den Seitenwänden gebildeten Material-Aufgabebereich einschwenkt. Der Stützhebel beeinflusst dann nicht die Baubreite der Materialbearbeitungseinrichtungen und kann auch so im Aufgabebereich integriert sein, dass die Gesamt-Bauhöhe der Maschine nicht beeinflusst wird.

Gemäß einer bevorzugten Erfindungsvariante kann es vorgesehen sein, dass der Stützhebel eine Blockieraufnahme aufweist, an oder in der ein Riegel in einer Sperrstellung zur Bildung der Formschlussverbindung anliegt oder eingesetzt ist, dass der Riegel an ein Betätigungselement angekoppelt ist, dass das Betätigungselement mittels einer Stelleinheit in Entriegelungsrichtung zwischen der Sperrstellung und einer Freigabestellung, in der der Riegel außer Eingriff mit der Blockieraufnahme steht, verstellbar ist. Über die Stelleinheit kann der Maschinenführer bequem die Formschlussverbindung herstellen oder diese wieder aufheben. Insbesondere ist dies mittels einer Fernsteuereinrichtung möglich, sodass er außerhalb des Gefahrenbereichs die Betätigung vornehmen kann. Der Riegel sichert zuverlässig die Formschlussverbindung.

Wenn vorgesehen ist, dass der Stützhebel an der Seitenwand und das Betätigungselement am Maschinenträger ortsfest befestigt sind, dann ergibt sich eine verschleißoptimierte Bauweise. Das Betätigungselement und mit ihm, die Stelleinheit sind dann nicht der starken stoßartigen Belastungen ausgesetzten Seitenwand, sondern dem Maschinenträger zugeordnet.

Gemäß einer bevorzugten Erfindungsvariante kann es vorgesehen sein, dass die Stelleinheit von einem Hydraulikzylinder und das Betätigungselement von einer Kolbenstange des Hydraulikzylinders gebildet sind, und dass die Bewegungsrichtung der Kolbenstange quer zur Wirkrichtung der Formschlussverbindung ausgerichtet ist. Die Kolbenstange und der Hydraulikzylinder sind in der Betriebsposition dann keinen oder nur geringen Querkräften ausgesetzt, da diese Kräfte über die Formschlussverbindung abgetragen werden. Hierdurch ergibt sich eine lange Lebensdauer für den Hydraulikzylinder.

Besonders bevorzugt ist es vorgesehen, dass der Hydraulikzylinder als doppeltwirkender Hydraulikzylinder ausgebildet ist, der vorzugsweise in Entriegelungsrichtung eine größere Stellkraft aufweist als in der entgegengesetzten Schließrichtung. Mit einem solchen Hydraulikzylinder kann der Maschinenführer ferngesteuert sowohl die Formschlussverbindung herstellen als auch diese wieder aufheben. Dadurch dass in Entriegelungsrichtung, also beim Aufheben der Formschlussverbindung, eine größere Stellkraft wirksam gemacht werden kann, lässt sich die in der Formschlussverbindung wirkende hohe Haftreibung zuverlässig überwinden.

Eine Erfindungsvariante kann dadurch gekennzeichnet sein, dass der Stützhebel einen Sperrabschnitt aufweist, der vorzugsweise an dem der Seitenwand abgekehrten Ende ausgebildet ist, dass der Sperrabschnitt in der Arbeitsposition einem Halteteil eines Blockierstücks zugeordnet ist, wobei das Halteteil an dem Maschinenträger angekoppelt ist, dass das Halteteil ein Formschlusselement aufweist, und dass der Riegel in der Arbeitsposition sowohl an dem Formschlusselement als auch an der Blockieraufnahme des Stützhebels quer zur Schwenkrichtung der Seitenwand formschlüssig anliegt. Bei dieser Anordnung kann die, zur Abstützung der Seitenwand erforderliche Stützkraft in der Formschlussverbindung über die zwischen dem Riegel und dem Halteteil gebildete Koppelstelle zuverlässig abgeleitet werden.

Wenn es dabei zusätzlich vorgesehen ist, dass der Sperrabschnitt des Stützhebels in der Arbeitsposition zwischen zwei Halteteilen angeordnet ist, die jeweils ein Formschlusselement aufweisen, und dass der Riegel an den Formschlusselementen der beiden Haltteile und an der Blockieraufnahme des Sperrabschnitts formschlüssig anliegt, dann lässt sich der Riegel zuverlässig aus der Blockadestellung lösen. Dies ist insbesondere deswegen möglich, weil der Sperrabschnitt zwischen den beiden Halteteilen eingefasst ist. Damit wird die Gefahr, dass der Riegel verkantet minimiert.

Wenn gemäß einer Erfindungsvariante vorgesehen ist, dass die Blockieraufnahme des Stützhebels eine Ausrichtflanke und der Riegel eine der Ausrichtflanke zugeordnete Gegenfläche aufweist, wobei die Ausrichtflanke und/oder die Gegenfläche gegenüber der Verstellrichtung des Riegels geneigt angeordnet verläuft, und dass bei einer Verstellung des Riegels in Richtung seiner Verriegelungsstellung die Ausrichtflanke an der Gegenfläche aufläuft, dann lässt sich die Seitenwand beim Verstellen des Riegels in die Schließposition in der Arbeitsposition exakt ausrichten. Dadurch dass die Ausrichtflanke auf der Gegenfläche aufläuft, wird der Stützhebel entsprechend in die exakte Arbeitsposition gebracht.

Wenn vorgesehen ist, dass der Riegel über ein Schwenklager an ein Verbindungsstück des Betätigungselements angekoppelt ist, dann lassen sich Lagetoleranzen ausgleichen. Dabei kann es nicht nur vorgesehen sein, dass über das Schwenklager Winkeldifferenzen ausgeglichen werden. Vielmehr ist es auch denkbar, dass innerhalb des Schwenklagers ein Spiel vorgesehen ist, um einen Linear-Versatz auszugleichen.

Eine weitere Erfindungsvariante sieht vor, dass ein Tragstück mit einem Halter vorgesehen ist, an dem die Stelleinheit mittels einer Befestigung befestigt ist, dass an dem Tragstück oder dem Halter das oder die Halteteile befestigt ist/sind, und dass der Halter mit dem Maschinenträger lösbar oder unlösbar verbunden ist. Auf diese Weise kann eine vormontierte Baueinheit gebildet werden, die sich mit dem Maschinenträger verbinden lässt. Diese Baueinheit kann dann exakt gegenüber dem Maschinenträger so ausgerichtet werden, dass der an der Stelleinheit angekoppelte Riegel und der Stützhebel einander passend zugeordnet sind. Anschließend wird die Baueinheit fixiert.

Wenn vorgesehen ist, dass die Seitenwand eine dem Aufgabebereich zugewandte Innenwand aufweist und rückwärtig, auf der der Innenwand abgekehrten Seite mit einer Versteifungsstruktur mit mindestens einer Aussteifungsstrebe ausgestattet ist, und dass der einteilige Stützhebel an der Versteifungsstruktur befestigt, vorzugsweise verschweißt ist, dann wird eine leichte Bauweise für die Seitenwand geboten, wobei der Stützhebel dennoch zuverlässig abgestützt ist und die im rauen Baustellenbetrieb auftretenden Kräfte zuverlässig ableiten kann.

Eine bevorzugte Erfindungsvariante ist dergestalt, dass die Trichterrückwand seitliche Randabschnitte aufweist, die in der Arbeitsposition Randabschnitten der Seitenwände zugeordnet sind, dass im Bereich der Randabschnitte der Seitenwände Verriegelungselemente und im Bereich der Randabschnitte der Trichterrückwand Gegen-Riegelelemente angeordnet sind, dass die Seitenwände in der Arbeitsposition mittels der Verriegelungselemente und der Gegen-Riegelelemente mit der Trichterrückwand verriegelt sind, und dass der Stützhebel vorzugsweise im Bereich des dem Randabschnitt abgewandten Endes der Seitenwand angeordnet ist. Über die Verriegelung der Seitenwände mit der Trichterrückwand ergibt sich eine zusätzliche Sicherung der Seitenwände und auch der Trichterrückwand in der Arbeitsposition. Wenn dabei die Stützhebel so angeordnet sind, dass sie im Bereich des dem Randabschnitt abgewandten Endes der Seitenwand angeordnet sind, dann ergibt sich eine besonders hohe Stabilität für die Abstützung der Seitenwand.

Für eine stabile Abstützung der Seitenwand kann es insbesondere auch vorgesehen sein, dass die Seitenwand zwei Lagerabschnitte aufweist, die zueinander beabstandet angeordnet sind und mittels denen die Seitenwand über Schwenklager an den Maschinenträger schwenkbar angeschlossen ist, und dass der Stützhebel im Bereich zwischen den beiden Lagerabschnitten angeordnet ist.

Die Erfindung wird im Folgenden anhand eines in den Zeichnungen dargestellten Ausführungsbeispiels näher erläutert. Es zeigen:
- Figur 1:: in schematischer Prinzipdarstellung eine mobile Brechanlage in Seitenansicht,
- Figur 2: eine perspektivische Detailansicht des hinteren linken Bereichs der Brechanlage gemäß Figur 1 mit einem Aufgabetrichter,
- Figur 3: die Darstellung gemäß Figur 2 in einer veränderten Perspektive, wobei der Aufgabetrichter in eine Transportposition verbracht wurde und
- Figur 4: eine der Figur 2 entnommene Detaildarstellung.

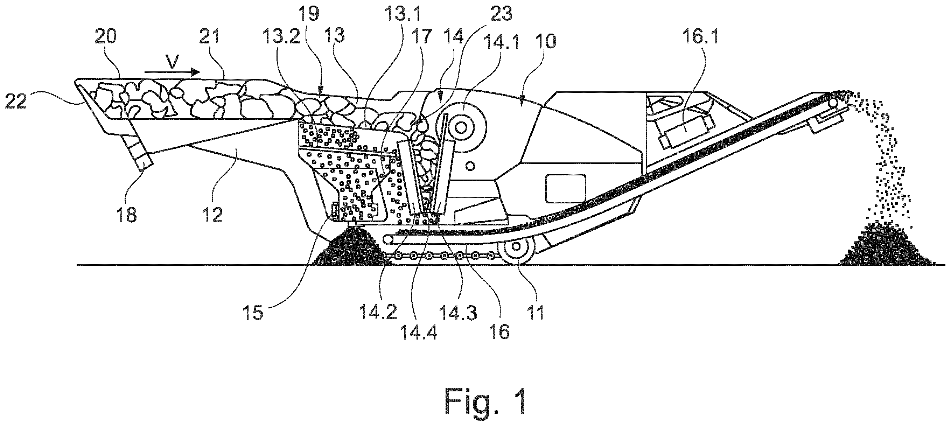

Figur 1 zeigt eine Materialbearbeitungseinrichtung, nämlich eine mobile Brechanlage 10, wie sie typischerweise zur Zerkleinerung von Recycling-, Gesteinsmaterial oder sonstigem mineralischen Material eingesetzt wird. Diese mobile Brechanlage 10 weist ein Maschinenchassis auf, das von zwei als Kettenlaufwerken ausgebildeten Fahrwerken 11 getragen ist.

Die Brechanlage 10 ist mit einer Aufgabeeinheit 20 ausgerüstet, die einen Aufgabetrichter aufweist. Dieser Aufgabetrichter weist zwei Seitenwände 21 und eine Trichterrückwand 22 auf. Die Aufgabeeinheit 20 wird von einem Ausleger 12 des Maschinenchassis getragen. Der Ausleger 12 weist einen Maschinenträger 12.1 auf. Dieser Maschinenträger 12.1 ist vorliegend von einem Längsträger, welcher sich in Längsrichtung der Brechanlage 10 erstreckt gebildet.

Über diese Aufgabeeinheit 20 kann die Brechanlage 10 mit dem zu zerkleinernden Gut befüllt werden. Die Aufgabeeinheit 20 weist bodenseitig eine Transporteinrichtung auf, die insbesondere eine Aufgaberinne aufweist. Über diese Fördereinrichtung wird das zu zerkleinernde Gut einer Siebeinheit 13 zugefördert. Der Aufgabeeinheit 20 ist ein Schwingungserreger 18 zugeordnet, der als ExzenterAntrieb ausgeführt sein kann. Mit diesem Schwingungserreger 18 lässt sich die Aufgabeeinheit 20 in Schwingung versetzen, um das in Förderrichtung V geförderte Gut der Siebeinheit 13 zuzuleiten. In der Siebeinheit 13 wird das zugeführte Material einem Siebprozess unterzogen. Das Anlagendesign kann so gewählt sein, dass der Schwingungserreger 18 nicht nur die Aufgaberinne, sondern auch die Siebeinheit 13 zu Transportzwecken in Schwingung versetzt. Insbesondere wird in Verbindung mit der geneigten Anordnung der Aufgaberinne und/oder eines oder mehrerer Siebdecks auch eine Transportwirkung, wie bei einem Vibrationsförderer, erreicht.

Wie Figur 1 erkennen lässt, wird die grobe Gesteinsfraktion, welche nicht ausgesiebt wird, von der Siebeinheit 13 einem Brechaggregat 14 zugefördert (Übergabebereich 19). Das Brechaggregat 14 ist vorliegend in Form eines Backenbrechers ausgeführt. Dieses Brechaggregat 14 weist zwei Brechbacken 14.2, 14.3 auf, die einen konvergierenden Spalt bilden. In diesen Spaltbereich hinein wird das zu zerkleinernde Gut gefördert. Das Brechaggregat 14 besitzt eine feststehende Brechbacke 14.2 und eine bewegliche Brechbacke 14.3 die bewegliche Brechbacke 14.3 wird von einem Exzenterantrieb 14.1 angetrieben.

Wie Figur 1 erkennen lässt, wird das grobe Gesteinsmaterial im konvergierenden Spalt gebrochen. Bodenseitig verlässt das gebrochene und zerkleinerte Gesteinsmaterial das Brechaggregat 14 im Bereich eines Brechmauls 14.4 des konvergierenden Spalts und fällt schwerkraftbedingt auf ein Brecherabzugsband 16 das Brecherabzugsband 16 kann, wie vorliegend als endlos umlaufendes Transportband ausgebildet sein.

Über das Brecherabzugsband 16 wird das zerkleinerte Gesteinsmaterial abgeleitet und hinter der Brechanlage 10 aufgehäuft.

Im Bereich des Brecherabzugsbands 16 kann an der Brechanlage 10 ein Magnetabscheider 16.1 vorgesehen sein. Dieser ist oberhalb des Materialstroms, welcher auf dem Brecherabzugsband 16 geführt ist, angeordnet. Magnetische, bzw. magnetisierbare Metallteile im Materialstrom werden von dem Magnetabscheider 16.1 magnetisch angezogen und aus dem Materialstrom ausgeschieden.

Wie die Zeichnung erkennen lässt, wird das von der Aufgabeeinheit 20 kommende Gut in der Siebeinheit 13 über ein Vorsieb 13.1 (z.B. Obersiebdeck) geleitet. Dabei wird ein Teil des Gesteinsmaterials ausgesiebt. Es handelt sich dabei um Gesteinsteile, welche aufgrund ihrer Größe nicht durch das Brechaggregat 14 geschickt werden müssen, da sie bereits eine Größe aufweisen, die in etwa der Gesteinsgröße entspricht, welche von dem Brechaggregat 14 gebrochen wird. Wie die Zeichnung erkennen lässt, wird ein Teil dieser ausgesiebten Gesteinsfraktion unmittelbar auf den Brecherabzugsband 16 aufgegeben und zwar im Bypass vorbei an dem Brechaggregat 14

Wie Figur 1 erkennen lässt, kann unterhalb des Vorsiebs 13.1 nun ein weiteres Siebunterdeck 13.2 in der Siebeinheit 13 vorhanden sein. Dieses Siebunterdeck 13.2 siebt aus dem bereits ausgesiebten Material eine weitere, feine Teilfraktion aus. Es ist nun teilweise gewünscht, diese besonders feine Teilfraktion zu separieren, wozu ein Seitenaustragband 15 Verwendung findet. Auf dieses endlos umlaufende Seitenaustragband 15 wird die feine Teilfraktion aufgegeben, aus dem Arbeitsbereich der Brechanlage 10 heraus gefördert und angehäuft, wie dies Figur 1 erkennen lässt.

Nun ist es so, dass nicht immer ein Ausfördern der feinen Teilfraktion gewünscht ist. Vielmehr möchte der Maschinenführer die Wahl haben, ob er sie separiert oder gemeinsam mit dem gröberen ausgesiebten Material direkt auf den Brecherabzugsband 16 aufgeben möchte. Zu diesem Zweck ist eine verstellbare Klappenrutsche 17 verwendet.

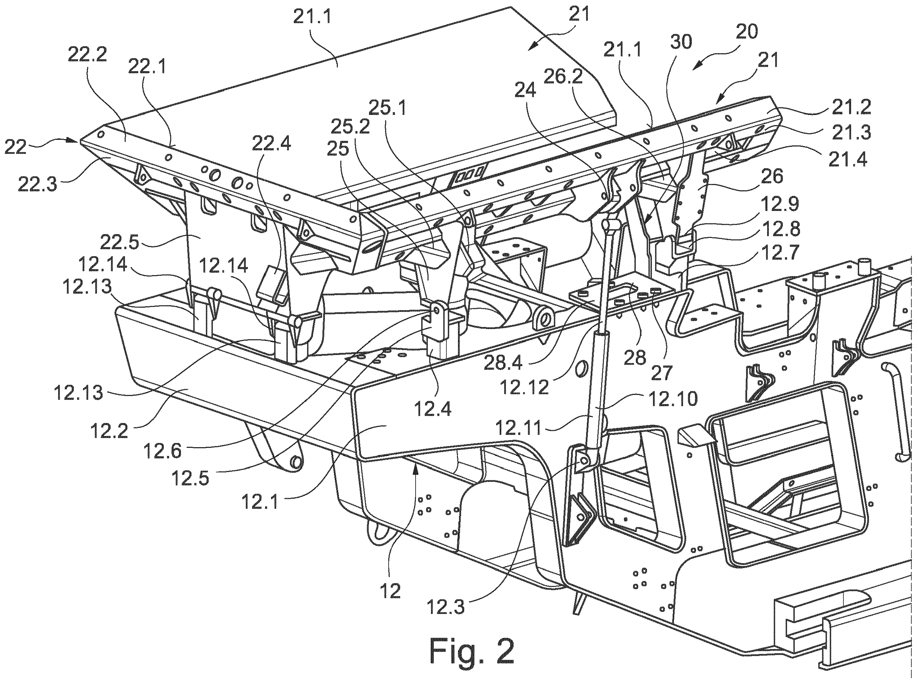

Wie dies vorstehend erwähnt wurde, wird das zu brechende Material im Bereich einer Aufgabeeinheit 20 mittels eines Baggers oder dergleichen in die Brechanlage 10 eingefüllt. In Figur 2 ist die Aufgabeeinheit 20 näher detailliert. Wie diese Darstellung zeigt, besitzt die Aufgabeeinheit 20 zwei Seitenwände 21. Diese Seitenwände 21 sind im Wesentlichen in Förderrichtung V orientiert. Rückseitig besitzt die Aufgabeeinheit 20 eine Trichterrückwand 22. Zwischen den aufgestellten Seitenwänden 21 und der Trichterrückwand 22 ist ein Aufgabebereich gebildet. In diesen Aufgabebereich kann das zu brechende Material eingefüllt werden. Nach unten hin schließt der Aufgabebereich mit der bereits oben erwähnten Fördereinrichtung, nämlich der Förderrinne oder dem Transportband ab.

Die beiden Seitenwände 21 können vorzugsweise spiegelsymmetrisch zueinander baugleich ausgeführt sein.

Die Seitenwände 21 weisen eine Innenwand 21.1 auf, die von einem Blech-Zuschnitt gebildet ist. Die Innenwand 21.1 bildet einen oberen abgewinkelten Rand 21.2 aus. An den oberen Rand 21.2 schließt sich eine Abkantung 21.3 an. Mittels dem oberen Rand 21.2 und der Abkantung 21.3 ist der obere Bereich der Seitenwand 21 ausgesteift. Auf ihrer dem Aufgabebereich abgewandten Seite weist die Innenwand 21.1 eine Aussteifungsstruktur auf. Diese Aussteifungsstruktur wird von Aussteifungsstreben 21.4 gebildet.

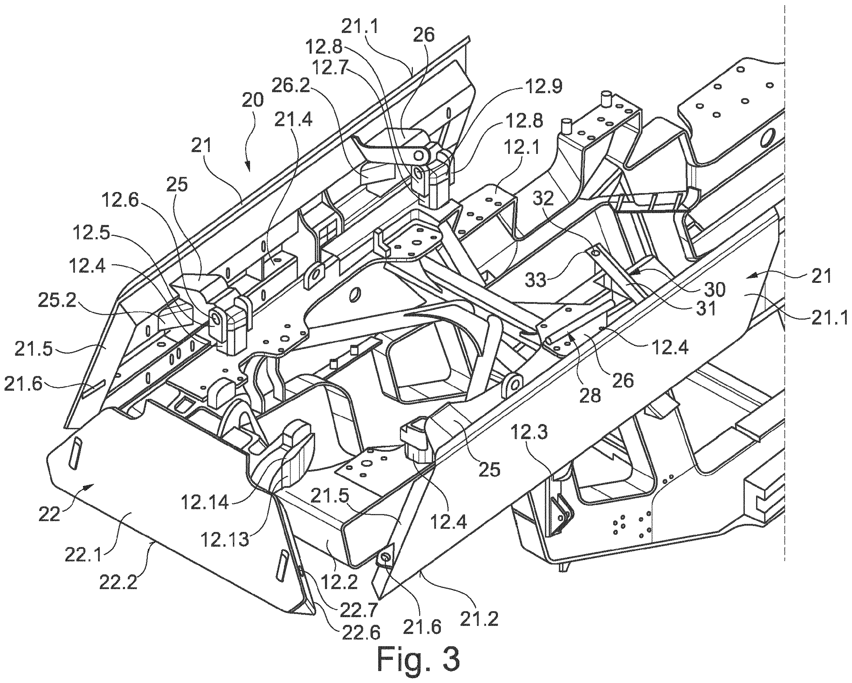

Wie Figur 3 erkennen lässt, weisen die Seitenwände 21 in ihrem der Trichterrückwand 22 zugewandten Bereich Randabschnitte 21.5 auf. An diesen Randabschnitten 21.15 sind Verriegelungselemente 21.6 vorgesehen. Die Verriegelungselemente 21.6 können beispielsweise in Form von abstehenden Laschen ausgebildet sein, die von dem Randabschnitt 21.5 abstehen und einen Durchbruch aufweisen.

Die Trichterrückwand 22 ist in ihrer Bauweise ähnlich aufgebaut wie die Seitenwände 21. Entsprechend weist die Trichterrückwand 22 eine Innenwand 22.1 auf, die von einem Blechzuschnitt gebildet sein kann. Von der Innenwand 22.1 steht ein oberer Rand 22.2 außenseitig ab, an den eine Abkantung 22.3 anschließt. Mittels des oberen Randes 22.2 und der Abkantung 22.3 ist die Trichterrückwand 22 in ihrem oberen Bereich ausgesteift.

Wie Figur 2 zeigt, weist die Brechanlage 10 ein Maschinenchassis mit einem Maschinenträger 12.1 auf. Als Maschinenträger 12.1 im Sinne der Erfindung kann jedes Bauteil angesehen werden, welches Teil des Maschinenchassis ist oder welches an das Maschinenchassis mittelbar oder unmittelbar angekoppelt ist und welches ausreichend stabil ist, um zumindest eine der Seitenwände 21 in der in Figur 2 gezeigten Betriebsposition zu stützen.

Wie Figur 2 zeigt, besitzt die Brechanlage 10 den Ausleger 12. Dieser Ausleger 12 weist zwei Längsträger auf, welche in Richtung der Längserstreckung der Brechanlage 10 orientiert sind. Diese beiden Längsträger bilden jeweils einen Maschinenträger 12.1. Rückwärtig sind die beiden Maschinenträger 12.1 über einen Querträger 12.2 miteinander verbunden.

Die beiden Seitenwände 21 können beispielsweise an den Maschinenträgern 12.1 in baugleicher Weise befestigt sein. Die nachfolgenden Ausführungen gelten daher für die beiden Seitenwände 21.

Die Maschinenträger 12.1 weisen einen Lagerbock 12.4 und einen Lagerhalter 12.7 auf. Der Lagerbock 12.4 trägt zwei Laschen 12.5 mit zueinander fluchtenden Bohrungen. In gleicher Weise besitzt der Lagerhalter 12.7 ebenfalls zwei Laschen 12.8 mit zueinander fluchtenden Bohrungen. Diese Bohrungen stehen in Flucht zu Bohrungen von Lagerabschnitten 25, 26. Die Lagerabschnitte 25, 26 sind an der außenseitigen Versteifungsstruktur der Seitenwand 21 befestigt. Durch die zueinander fluchtenden Bohrungen können Lagerbolzen zur Bildung einer Schwenklagerung 12.6, 12.9 hindurch geführt werden. Die Schwenkachse der beiden Schwenklager 12.6, 12.9 fluchten miteinander. Entsprechend kann die Seitenwand 21 um diese gemeinsame Schwenkachse zwischen der in Figur 2 gezeigten Arbeitsposition und der in Figur 3 gezeigten abgeklappten Transportposition bewegt werden.

Wie Figur 2 zeigt, können der Lagerabschnitt 25 und/oder der Lagerabschnitt 26 über seitliche Aussteifung in 25.2, 26.2 an die Seitenwand 21 angekoppelt sein. Diese Aussteifungen 25.2, 26.2 erhöhen nicht nur die Steifigkeit der Lagerabschnitte 25, 26 sondern auch die der Seitenwand 21 in diesem stark beanspruchten Bereich.

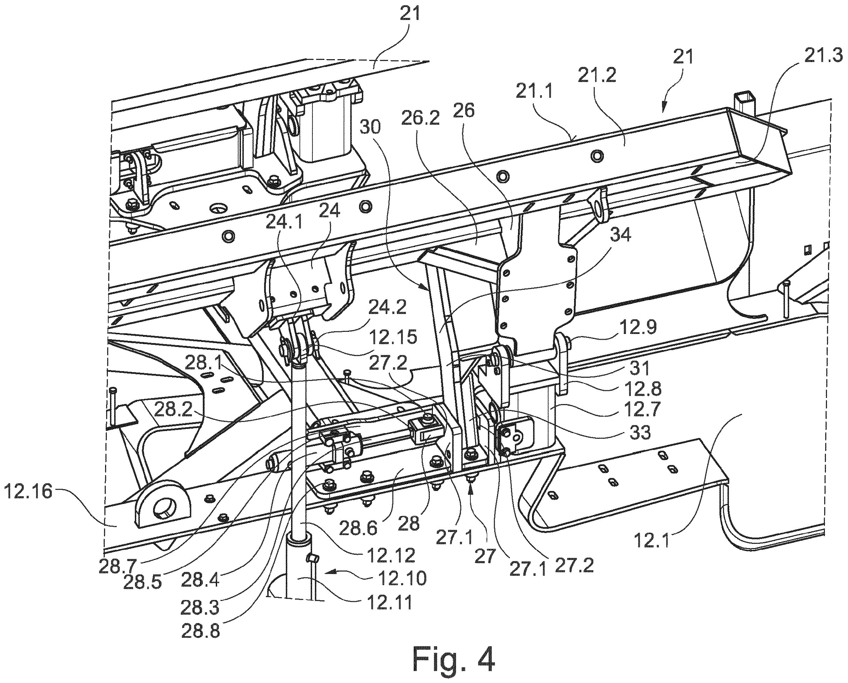

Wie Figur 2 weiter zeigt, sind an den Maschinenträgern 12.1 Halter 12.3 angeordnet. An diesen Haltern 12.3 kann jeweils ein Aktuator 12.10 schwenkbar befestigt werden. Der Aktuator 12.10 wird von einem Hydraulikzylinder gebildet. Entsprechend weist der Aktuator 12.10 einen Zylinder 12.11 und einen darin verstellbaren Kolben auf. An den Kolben ist eine Kolbenstange 12.12 angeschlossen. Die Kolbenstange 12.12 ist an ihrem freien Ende an einen Stützabschnitt 24 der Seitenwand 21 schwenkbar angeschlossen. Dieses Detail ist Figur 4 deutlicher zu entnehmen. Wie diese Darstellung zeigt, trägt der Stützabschnitt 24 einen Halter 24.1. Die Kolbenstange 12.12 weist an ihrem freien Ende einen Kopf 12.15 auf. Dieser Kopf 12.15 weist eine Bohrung auf, die in Flucht zu Bohrungen des Halters 24.1 steht. Durch die fluchtenden Bohrungen kann ein Bolzen 24.2 zur Bildung einer Schwenklagerung hindurchgesetzt werden. Dieses Schwenklager steht im Abstand zu den Schwenklagern 12.6 und 12.9, wobei über diese exzentrische Zuordnung ein Stützabstand geschaffen wird.

Die Trichterrückwand 22 weist, wie dies oben beschrieben wurde den Lagerabschnitt 22.5 auf. Dieser Lagerabschnitt 22.5 weist Lageransätze auf, welche zwei Lagerböcken 12.13 zugeordnet sind. Die Lagerböcke 12.13 sind an dem Querträger 12.2 festgemacht. Auch die Lagerböcke 12.13 weisen wieder Bohrungen auf, die in Flucht zu den Lageransätzen des Lagerabschnitts 22.5 stehen. Unter Verwendung von Lagerbolzen werden hier Schwenklager 12.14 gebildet. Um die zueinander fluchtenden Gelenksachsen dieser beiden Schwenklager 12.14 kann die Trichterrückwand 22 zwischen der in Figur 2 gezeigten Arbeitsposition und der in Figur 3 veranschaulichten Transportposition verschwenkt werden.

Figur 3 veranschaulicht, dass auch die Trichterrückwand 22 Randabschnitte 22.6 aufweist. Diese Randabschnitte 22.6 sind den Randabschnitten 21.5 der Seitenwände 21 in der in Figur 2 gezeigten Betriebsposition zugeordnet. Im Bereich der Randabschnitte 22.6 sind die in Figur 3 veranschaulichten Gegen-Riegelelemente 22.7 angeordnet. Diese Gegen-Riegelelemente 22.7 können beispielsweise von verstellbaren Bolzen gebildet werden. Diese verstellbaren Bolzen greifen in die Durchbrüche der Verriegelungselemente 21.6 der Seitenwände 21 ein, wenn diese in der Betriebsposition stehen. Über die so gebildete formschlüssige Verriegelung werden die Betriebspositionen der Seitenwände 21 und der Trichterrückwand 22 gesichert.

Wie die Figuren 2 und 3 veranschaulichen, ist an jeder der beiden Seitenwände 21 eine Stützeinrichtung 30 angeordnet. Diese Stützeinrichtung 30 umfasst wenigstens einen Stützhebel 31. Der Stützhebel 31 ist als einteiliger starrer Hebel ausgebildet, was eine Besonderheit der Erfindung darstellt.

Der Stützhebel 31 weist einen Befestigungsabschnitt 34 auf. Mittels dieses Befestigungsabschnitts 34 kann der Stützhebel 31 an der Seitenwand 21 befestigt werden. Vorzugsweise ist der Befestigungsabschnitt 34 an der Außenseite der Innenwand 22.1 und weiter bevorzugt insbesondere an zumindest eine der Aussteifungsstreben 21.4 der Aussteifungsstruktur befestigt. Dabei wird die Befestigung vorzugsweise von einer stoffschlüssigen Verbindung, insbesondere einer Schweißverbindung gebildet.

Der an den Befestigungsabschnitt 34 einteilig anschließende hebelförmige Sperrabschnitt 33 steht von der Seitenwand 21 ab. Der Sperrabschnitt 33 besitzt eine Blockieraufnahme 32. Diese Blockieraufnahme 32 kann, wie im vorliegenden Ausführungsbeispiel von einem Durchbruch gebildet sein, der in den Sperrabschnitt 33 eingebracht ist.

Wie Figur 3 erkennen lässt, ist der Stützhebel 31 im Bereich zwischen dem Lagerbock 12.4 und dem Lagerhalter 12.7 angeordnet. Dabei ist die Zuordnung so getroffen, dass der Stützhebel 31 im Bereich des der Trichterrückwand 22 abgewandten Endes der Seitenwand 21 angeordnet ist, um eine stabile Abstützung der Seitenwand 21 zu ermöglichen.

Wie Figur 3 zeigt, steht der Stützhebel 31 in der abgeklappten Position der Seitenwände, in welche diese sich in der Transportposition befinden, platzsparend in den Aufgabebereich vor. In der aufgerichteten Betriebsposition, die in Figur 2 gezeigt ist, ist der Sperrabschnitt 33 des Stützhebels 31 einem Blockierstück 27 zugeordnet. Dies ist deutlicher in Figur 4 zu erkennen.

Wie Figur 4 zeigt, besitzt das Blockierstück 27 zwei Halteteile 27.1, die zueinander beabstandet angeordnet sind. Die Halteteile 27.1 können von plattenförmigen Elementen gebildet sein. Jedes der Halteteile 27.1 besitzt ein Formschlusselement 27.2. Wie die Zeichnungen veranschaulichen, kann dieses Formschlusselement 27.2 von einem Durchbruch in den Halteteilen 27.1 gebildet sein. Die Durchbrüche in den beiden Halteteilen 27.1 fluchtenden miteinander. Die Halteteile 27.1 sind an einem Tragstück 28.7 befestigt. Das Tragstück 28.7 kann plattenförmig ausgebildet sein. Es ist mit einem Halter 28.6 verbunden, wobei die Verbindung zwischen dem Halter 28.6 und dem Tragstück 28.7 vorzugsweise von einer Schweißverbindung gebildet ist. Ebenso können die Halteteile 27.1 mit dem Halter 28.6 bzw. dem Tragstück 28.7 verbunden, beispielsweise verschweißt sein. Das Blockierstück 27 trägt weiterhin eine Stelleinheit 28.4. Im vorliegenden Beispiel ist die Stelleinheit 28.4 mittels einer Befestigung 28.5 an dem Tragstück 28.7 festgelegt. Die Stelleinheit 28.4 wird von einem Hydraulikzylinder gebildet. Dieser Hydraulikzylinder umfasst auch eine Kolbenstange, welche ein Betätigungselement 28.3 bildet. An dem freien Ende des Betätigungselements 28.3 ist ein Verbindungsstück 28.2 vorgesehen. An das Verbindungsstück 28.2 ist über ein Schwenklager 28.1 ein Riegel 28 angeschlossen.

Das Blockierstück 27 bildet zusammen mit dem Halter 28.6 und dem Tragstück 28.7 sowie der Stelleinheit 28.4 und dem Riegel 28 eine vormontierte Baueinheit. Diese vormontierte Baueinheit kann mittels Schrauben 28.8 mit einem Flansch 12.16 des Maschinenträgers 12.1 verbunden werden. Dabei ist die Zuordnung zu dem Maschinenträger 12.1 so getroffen, dass in der in Figur 4 gezeigten Betriebsposition der Stützhebel 31 zwischen den beiden Halteteilen 27.1 zum Liegen kommt. Insbesondere steht dabei die Blockieraufnahme 32 des Stützhebels 31 in Flucht zu den beiden Formschlusselementen 27.2 der Halteteile 27.1. Wie Figur 4 erkennen lässt, wird diese Betriebsposition mit dem Riegel 28 gesichert. Der Riegel 28 durchgreift die zueinander in Flucht stehenden Formschlusselemente 27.2 und die Blockieraufnahme 32. Auf diese Weise wird eine Formschlussverbindung gebildet, wobei ein Formschluss quer zur Schwenkrichtung der Seitenwand 21 gebildet ist. Auf diese Weise ist die Seitenwand 21 formschlüssig gegenüber dem Maschinenträger 12.1 blockiert. Vorzugsweise ist es so, dass die Formschlussverbindung sowohl in Aufklapp- als auch in Abklapp-Richtung wirkt. Hierdurch wird eine sichere Festlegung der Seitenwand 21 erreicht. Allerdings ist dies im Sinne der Erfindung nicht zwingend. Insbesondere kann es auch nur vorgesehen sein, dass die Formschlussverbindung in Abklapp-Richtung wirksam ist.

Um die Seitenwände 21 ausgehend von der in den Figuren 2 und 4 gezeigten Betriebsposition in die in Figur 3 gezeigte Transportposition zu bewegen wird zunächst die Verbindung zwischen der Trichterrückwand 22 und den Seitenwänden 21 (Verriegelungselement 21.6 und Gegen-Riegelelemente 22.7) gelöst. Dann kann die Trichterrückwand 22 mit geeigneten Vorrichtungen, beispielsweise eines in den Zeichnungen nicht dargestellten Aktuators, in die in Figur 3 gezeigte abgeklappte Transportposition gebracht werden.

Gleichzeitig oder anschließend können die Seitenwände 21 verschwenkt werden. Hierzu wird zunächst die Stelleinheit 28.4 aktiviert und das Betätigungselement 28.3 zurückgezogen. Hierdurch wird der Riegel 28 außer Eingriff gebracht mit der Blockieraufnahme 32 des Stützhebels 31. Damit ist der Stützhebel 31 freigegeben und nicht mehr mit dem Blockierstück 27 verbunden. Nun kann der Aktuator 12.10 aktiviert werden, wobei die Kolbenstange 12.12 eingezogen wird. Hierdurch schwenkt die Seitenwand 21 um die durch die Schwenklager 12.6 und 12.9 gebildete Schwenkachse. Bei dieser Schwenkbewegung fährt der Sperrabschnitt 33 des Stützhebels 31 in Figur 4 in Richtung der Bildtiefe nach hinten aus der zwischen den beiden Halteteilen 27.1 gebildeten Aufnahme heraus. Infolge der Schwenkbewegung der Seitenwand 21 verschwenkt auch der Stützhebel 31, bis er die in Figur 3 gezeigte Position erreicht hat und im Aufgabebereich zwischen den beiden Seitenwänden 21 zum Liegen kommt.

Zur Begrenzung der Schwenkbewegung sowohl der Trichterrückwand 22 und/oder der Seitenwände 21 können Anschläge 22.4 und 25.1 vorgesehen sein. Dabei kann der Anschlag 22.4 beispielsweise an dem Lagerabschnitt 22.5 der Trichterrückwand 22 vorgesehen sein. Der Anschlag 25.1 kann beispielsweise an dem Lagerabschnitt 25 der Seitenwand 21 vorgesehen sein. Diese Lagerabschnitte 25 bieten eine stabile Ankoppelstelle für den Anschlag 22.4 bzw. 25.1.

Zum Aufstellen der Seitenwände 21 bzw. der Trichterrückwand 22 ausgehend von der in Figur 3 gezeigt Transportposition in die in Figur 2 gezeigte Betriebsposition muss die vorstehend beschriebene Betriebsweise in umgekehrter Reihenfolge durchlaufen werden.

Wie dies vorstehend erläutert wurde, wird der Riegel 28 durch die Blockiereraufnahme 32 des Stützhebels 31 und die hierzu in Flucht stehenden Formschlusselemente 27.2 der Halteteile 27.1 hindurchgeführt. Dementsprechend erfolgt die Kraftabtragung von dem Stützhebel 31 über den Riegel 28 in die Halteteile 27.1, insbesondere über die hier gebildeten Formschlussverbindungen. Die Kraftrichtung verläuft dabei quer zur Betätigungsrichtung der Kolbenstange (Betätigungselement 28.3). Damit ist die Kolbenstange von Querkräften zumindest weitgehend freigestellt, sodass eine belastungsarme Betriebsweise für die Stelleinheit 28.4 möglich ist. Insbesondere wird eine Verbiegung der Kolbenstange verhindert.

Es kann auch vorgesehen sein, dass der Riegel 28 eine keilförmige Geometrie aufweist. Wenn er entsprechend in die Blockiereraufnahme 32 des Stützhebels 31 eingeschoben wird, so läuft eine Ausrichterflanke der keilförmigen Geometrie des Riegels 28 auf einer Gegenfläche der Blockiereraufnahme 32 auf. Auf diese Weise kann der Stützhebel 31 exakt gegenüber dem Blockierstück 27 ausgerichtet werden. Mit dieser Ausrichtung gelingt dann auch eine exakte Ausrichtung der Seitenwand 21 in der Betriebsposition.

## Patentansprüche

1. Aufgabetrichter für eine Materialbearbeitungseinrichtung, insbesondere für eine mobile Brech- oder Siebanlage (10), mit zwei Seitenwänden (21) und einer Trichterrückwand (22), wobei die Seitenwände (21) mittelbar oder unmittelbar an einem Maschinenträger (12.1) schwenkbar angekoppelt und zwischen einer aufgestellten Arbeitsposition und einer abgeklappten Transportposition verstellbar sind, wobei zwischen den Seitenwänden (21) ein Aufgabebereich gebildet ist, wobei wenigstens eine der Seitenwände (21) in der aufgestellten Arbeitsposition mittels einer Stützeinrichtung (30) gegenüber dem Maschinenträger (12.1) abgestützt ist, wobei die Stützeinrichtung (30) einen Stützhebel (31) aufweist, der in der Arbeitsposition gegenüber dem Maschinenträger (12.1) mittels einer lösbaren Formschlussverbindung mittelbar oder unmittelbar abgestützt ist, wobei die Formschlussverbindung ein Abklappen der Seitenwand (21) verhindert, **dadurch gekennzeichnet, dass** der Stützhebel (31) in der abgeklappten Transportposition in den Aufgabebereich vorsteht.

2. Aufgabetrichter nach Anspruch 1, **dadurch gekennzeichnet, dass** der Stützhebel (31) eine Blockieraufnahme (32) aufweist, an oder in der ein Riegel (28) in einer Sperrstellung zur Bildung der Formschlussverbindung anliegt oder eingesetzt ist, dass der Riegel (28) an ein Betätigungselement (28.3) angekoppelt ist, dass das Betätigungselement (28.3) mittels einer Stelleinheit (28.4) in Entriegelungsrichtung zwischen der Sperrstellung und einer Freigabestellung, in der der Riegel (28) außer Eingriff mit der Blockieraufnahme (32) steht, verstellbar ist.

3. Aufgabetrichter nach Anspruch 2, **dadurch gekennzeichnet, dass** der Stützhebel (31) an der Seitenwand (21) und das Betätigungselement (28.3) am Maschinenträger (12.1) ortsfest befestigt sind.

4. Aufgabetrichter, nach einem der Ansprüche 2 oder 3, **dadurch gekennzeichnet, dass** die Stelleinheit (28.4) von einem Hydraulikzylinder und das Betätigungselement (28.3) von einer Kolbenstange des Hydraulikzylinders gebildet sind, und dass die Bewegungsrichtung der Kolbenstange quer zur Wirkrichtung der Formschlussverbindung ausgerichtet ist.

5. Aufgabetrichter nach Anspruch 4, **dadurch gekennzeichnet, dass** der Hydraulikzylinder als doppeltwirkender Hydraulikzylinder ausgebildet ist, der vorzugsweise in Entriegelungsrichtung eine größere Stellkraft aufweist als in der entgegengesetzten Schließrichtung.

6. Aufgabetrichter nach einem der Ansprüche 2 bis 5, **dadurch gekennzeichnet, dass** der Stützhebel (31) einen Sperrabschnitt (33) aufweist, der vorzugsweise an dem der Seitenwand (21) abgekehrten Ende ausgebildet ist, dass der Sperrabschnitt (33) in der Arbeitsposition einem Halteteil (27.1) eines Blockierstücks (27) zugeordnet ist, wobei das Halteteil (27.1) an dem Maschinenträger (12.1) angekoppelt ist, dass das Halteteil (27.1) ein Formschlusselement (27.2) aufweist, und dass der Riegel (28) in der Arbeitsposition sowohl an dem Formschlusselement (27.2) als auch an der Blockieraufnahme (32) des Stützhebels (31) quer zur Schwenkrichtung der Seitenwand (21) formschlüssig anliegt.

7. Aufgabetrichter nach Anspruch 6, **dadurch gekennzeichnet, dass** der Sperrabschnitt (33) des Stützhebels (31) in der Arbeitsposition zwischen zwei Halteteilen (27.1) angeordnet ist, die jeweils ein Formschlusselement (27.2) aufweisen, und dass der Riegel (28) an den Formschlusselementen (27.2) der beiden Haltteile (27.1) und an der Blockieraufnahme (32) des Sperrabschnitts (33) formschlüssig anliegt.

8. Aufgabetrichter nach einem der Ansprüche 2 bis 7, **dadurch gekennzeichnet, dass** die Blockieraufnahme (32) des Stützhebels (31) eine Ausrichtflanke und der Riegel (28) eine der Ausrichtflanke zugeordnete Gegenfläche aufweist, wobei die Ausrichtflanke und/oder die Gegenfläche gegenüber der Verstellrichtung des Riegels (28) geneigt angeordnet verläuft, und dass bei einer Verstellung des Riegels (28) in Richtung seiner Verriegelungsstellung die Ausrichtflanke an der Gegenfläche aufläuft.

9. Aufgabetrichter nach einem der Ansprüche 2 bis 8, **dadurch gekennzeichnet, dass** der Riegel (28) über ein Schwenklager (28.1) an ein Verbindungsstück (28.2) des Betätigungselements (28.3) angekoppelt ist.

10. Aufgabetrichter nach einem der Ansprüche 2 bis 9, **dadurch gekennzeichnet, dass** ein Tragstück (28.7) mit einem Halter (28.6) vorgesehen ist, an dem die Stelleinheit (28.4) mittels einer Befestigung (28.5) befestigt ist, dass an dem Tragstück (28.7) oder dem Halter (28.6) das oder die Halteteile (27.1) befestigt ist/sind, und dass der Halter (28.6) mit dem Maschinenträger (12.1) lösbar oder unlösbar verbunden ist.

11. Aufgabetrichter nach einem der Ansprüche 1 bis 10, **dadurch gekennzeichnet, dass** die Seitenwand (21) eine dem Aufgabebereich zugewandte Innenwand (21.1) aufweist und rückwärtig, auf der der Innenwand (21.1) abgekehrten Seite mit einer Versteifungsstruktur mit mindestens einer Aussteifungsstrebe (21.4) ausgestattet ist, und dass der Stützhebel (31) an der Versteifungsstruktur befestigt, vorzugsweise verschweißt ist.

12. Aufgabetrichter nach einem der Ansprüche 1 bis 11, **dadurch gekennzeichnet, dass** die Trichterrückwand (22) seitliche Randabschnitte (22.6) aufweist, die in der Arbeitsposition Randabschnitten (21.5) der Seitenwände (21) zugeordnet sind, dass im Bereich der Randabschnitte (21.5) der Seitenwände (21) Verriegelungselemente (21.6) und im Bereich der Randabschnitte (22.6) der Trichterrückwand (22) Gegen-Riegelelemente (22.7) angeordnet sind, dass die Seitenwände (21) in der Arbeitsposition mittels der Verriegelungselemente (21.6) und der Gegen-Riegelelemente (22.7) mit der Trichterrückwand (22) verriegelt sind, und dass der Stützhebel (31) vorzugsweise im Bereich des dem Randabschnitt (21.5) abgewandten Endes der Seitenwand (21) angeordnet ist.

13. Aufgabetrichter nach einem der Ansprüche 1 bis 10, **dadurch gekennzeichnet, dass** die Seitenwand (21) zwei Lagerabschnitte (25, 26) aufweist, die zueinander beabstandet angeordnet sind und mittels denen die Seitenwand (21) über Schwenklager (12.6, 12.9) an den Maschinenträger (12.1) schwenkbar angeschlossen ist und dass der Stützhebel (31) im Bereich zwischen den beiden Lagerabschnitten (26, 26) angeordnet ist.

14. Aufgabetrichter nach einem der Ansprüche 1 bis 13, **dadurch gekennzeichnet, dass** ein Aktuator (12.10), der vorzugsweise von einem Hydraulikzylinder gebildet ist und der an einer Seite an einen Halter (24.1) eines Stützabschnitts (24) der Seitenwand (21) und an der anderen Seite an einen Halter (12.3) des Maschinenträgers (12.1) angeschlossen ist, und dass mittels des Aktuators (12.10) die Seitenwand (21) zwischen der Transport- und der Arbeitsposition verstellbar ist.

## Claims

1. Feed hopper for a material processing device, in particular for a mobile crushing or screening plant (10), having two side walls (21) and a hopper rear wall (22), the side walls (21) being coupled indirectly or directly to a machine carrier (12. 1) and being adjustable between an erected working position and a folded-down transport position, a feed region being formed between the side walls (21), at least one of the side walls (21) being supported in the erected working position with respect to the machine carrier (12.1) by means of a supporting device (30),
the supporting device (30) having a supporting lever (31) which, in the working position, is supported indirectly or directly with respect to the machine carrier (12.1) by means of a releasable positive-locking connection, the positive-locking connection preventing the side wall (21) from folding down,
**characterised in**
**that** the supporting lever (31) projects into the feed region in the folded-down transport position.

2. Feed hopper according to claim 1, **characterized in that** the supporting lever (31) has a blocking receptacle (32) on or in which a latch (28) rests or is inserted in a blocking position for forming the form-fitting connection, **in that** the latch (28) is coupled to an actuating element (28. 3), **in that** the actuating element (28.3) can be adjusted in the unlocking direction by means of an actuating unit (28.4) between the locked position and a release position in which the latch (28) is out of engagement with the blocking receptacle (32).

3. Feed hopper according to claim 2, **characterised in that** the support lever (31) is fixed to the side wall (21) and the actuating element (28.3) is fixed to the machine carrier (12.1).

4. Feed hopper according to one of claims 2 or 3, **characterised in that** the adjusting unit (28.4) is formed by a hydraulic cylinder and the actuating element (28.3) is formed by a piston rod of the hydraulic cylinder, and **in that** the direction of movement of the piston rod is aligned transversely to the direction of action of the positive connection.

5. Feed hopper according to claim 4, **characterised in that** the hydraulic cylinder is designed as a double-acting hydraulic cylinder which preferably has a greater actuating force in the unlocking direction than in the opposite closing direction.

6. Feed hopper according to one of the claims 2 to 5, **characterised in that** the support lever (31) has a locking section (33) which is preferably formed at the end facing away from the side wall (21), **in that** the locking section (33) is associated in the working position with a holding part (27.1) of a blocking piece (27), the holding part (27. 1) being coupled to the machine carrier (12.1), **in that** the retaining part (27.1) has a positive-locking element (27.2), and **in that**, in the working position, the latch (28) bears positively both against the positive-locking element (27.2) and against the blocking receptacle (32) of the supporting lever (31) transversely with respect to the pivoting direction of the side wall (21).

7. Feed hopper according to claim 6, **characterised in that** the blocking section (33) of the supporting lever (31) is arranged in the working position between two holding parts (27.1) which each have a positive-locking element (27.2), and **in that** the bolt (28) bears positively against the positive-locking elements (27.2) of the two holding parts (27.1) and against the blocking receptacle (32) of the blocking section (33).

8. Feed hopper according to one of the claims 2 to 7, **characterized in that** the blocking receptacle (32) of the supporting lever (31) has an aligning flank and the bolt (28) has a mating surface assigned to the aligning flank, the aligning flank and/or the mating surface running in an inclined manner with respect to the adjusting direction of the bolt (28), and **in that**, when the bolt (28) is adjusted in the direction of its locking position, the aligning flank runs up against the mating surface.

9. Feed hopper according to one of the claims 2 to 8, **characterised in that** the bolt (28) is coupled to a connecting piece (28.2) of the actuating element (28.3) via a pivot bearing (28.1).

10. Feed hopper according to one of the claims 2 to 9, **characterised in that** a supporting piece (28.7) with a holder (28.6) is provided, to which the actuating unit (28.4) is fastened by means of a fastening (28.5), **in that** the holding part or parts (27.1) is/are fastened to the supporting piece (28.7) or the holder (28.6), and **in that** the holder (28.6) is releasably or non-releasably connected to the machine carrier (12.1).

11. Feed hopper according to one of the claims 1 to 10, **characterised in that** the side wall (21) has an inner wall (21.1) facing the feed area and is equipped at the rear, on the side facing away from the inner wall (21.1), with a stiffening structure with at least one stiffening strut (21.4), and **in that** the support lever (31) is fastened, preferably welded, to the stiffening structure.

12. Feed hopper according to one of the claims 1 to 11, **characterised in that** the hopper rear wall (22) has lateral edge sections (22.6) which, in the working position, are associated with edge sections (21.5) of the side walls (21), **in that** locking elements (21.6) are provided in the region of the edge sections (21.5) of the side walls (21) and in the region of the edge sections (22. 6) of the hopper rear wall (22), **in that** the side walls (21) are locked to the hopper rear wall (22) in the working position by means of the locking elements (21.6) and the counter-locking elements (22.7), and **in that** the supporting lever (31) is preferably arranged in the region of that end of the side wall (21) which faces away from the edge portion (21.5).

13. Feed hopper according to one of the claims 1 to 10, **characterized in that** the side wall (21) has two bearing sections (25, 26) which are arranged at a distance from one another and by means of which the side wall (21) is pivotably connected to the machine carrier (12.1) via pivot bearings (12.6, 12.9), and **in that** the supporting lever (31) is arranged in the region between the two bearing sections (26, 26).

14. Feed hopper according to one of the claims 1 to 13, **characterised in that** an actuator (12.10), which is preferably formed by a hydraulic cylinder and which is connected on one side to a holder (24.1) of a support section (24) of the side wall (21) and on the other side to a holder (12.3) of the machine carrier (12.1), and that by means of the actuator (12.10) the side wall (21) is adjustable between the transport position and the working position.

## Revendications

1. Trémie d'alimentation pour un dispositif de traitement de matériaux, en particulier pour une installation de concassage ou de criblage mobile (10), avec deux parois latérales (21) et une paroi arrière de trémie (22), les parois latérales (21) étant fixées directement ou indirectement à un support de machine (12. 1) et peuvent être déplacées entre une position de travail relevée et une position de transport rabattue, une zone de chargement étant formée entre les parois latérales (21), au moins l'une des parois latérales (21) étant soutenue par rapport au support de machine (12.1) dans la position de travail relevée au moyen d'un dispositif de soutien (30),
le dispositif de soutien (30) présentant un levier de soutien (31) qui, dans la position de travail, est soutenu directement ou indirectement par rapport au support de machine (12.1) au moyen d'une liaison par complémentarité de forme amovible, la liaison par complémentarité de forme empêchant un rabattement de la paroi latérale (21),
**caractérisée en ce que**
le levier de soutien (31) fait saillie dans la zone de chargement dans la position de transport rabattue.

2. Trémie d'alimentation selon la revendication 1, **caractérisée en ce que** le levier d'appui (31) présente un logement de blocage (32) contre ou dans lequel un verrou (28) s'applique ou est inséré dans une position de blocage pour former la liaison par complémentarité de forme, **en ce que** le verrou (28) est relié à un élément d'actionnement (28. 3), **en ce que** l'élément d'actionnement (28.3) peut être déplacé au moyen d'une unité de réglage (28.4) dans la direction de déverrouillage entre la position de blocage et une position de libération dans laquelle le verrou (28) est hors de prise avec le logement de blocage (32).

3. Trémie d'alimentation selon la revendication 2, **caractérisée en ce que** le levier d'appui (31) est fixé de manière stationnaire sur la paroi latérale (21) et l'élément d'actionnement (28.3) sur le support de machine (12.1).

4. Trémie d'alimentation selon l'une des revendications 2 ou 3, **caractérisée en ce que** l'unité de réglage (28.4) est formée par un vérin hydraulique et l'élément d'actionnement (28.3) par une tige de piston du vérin hydraulique, et **en ce que** le sens de déplacement de la tige de piston est orienté transversalement au sens d'action de la liaison par complémentarité de forme.

5. Trémie d'alimentation selon la revendication 4, **caractérisée en ce que** le vérin hydraulique est conçu comme un vérin hydraulique à double effet, qui présente de préférence une force de réglage plus importante dans le sens de déverrouillage que dans le sens de fermeture opposé.

6. Trémie d'alimentation selon l'une des revendications 2 à 5, **caractérisée en ce que** le levier d'appui (31) présente une section de blocage (33) qui est de préférence réalisée à l'extrémité opposée à la paroi latérale (21), **en ce que** la section de blocage (33) est associée, dans la position de travail, à une pièce de maintien (27.1) d'une pièce de blocage (27), la pièce de maintien (27. 1) est couplée au support de machine (12.1), **en ce que** la pièce de retenue (27.1) présente un élément à engagement positif (27.2), et **en ce que** le verrou (28), dans la position de travail, s'appuie par engagement positif aussi bien sur l'élément à engagement positif (27.2) que sur le logement de blocage (32) du levier d'appui (31), transversalement à la direction de pivotement de la paroi latérale (21).

7. Trémie d'alimentation selon la revendication 6, **caractérisée en ce que** la section de blocage (33) du levier d'appui (31) est disposée, dans la position de travail, entre deux parties de retenue (27.1) qui présentent chacune un élément à engagement positif (27.2), et **en ce que** le verrou (28) s'applique par engagement positif contre les éléments à engagement positif (27.2) des deux parties de retenue (27.1) et contre le logement de blocage (32) de la section de blocage (33).

8. Trémie d'alimentation selon l'une des revendications 2 à 7, **caractérisée en ce que** le logement de blocage (32) du levier d'appui (31) présente un flanc d'alignement et le verrou (28) une contre-surface associée au flanc d'alignement, le flanc d'alignement et/ou la contre-surface étant disposés de manière inclinée par rapport à la direction de déplacement du verrou (28), et **en ce que** lors d'un déplacement du verrou (28) en direction de sa position de verrouillage, le flanc d'alignement vient buter contre la contre-surface.

9. Trémie d'alimentation selon l'une des revendications 2 à 8, **caractérisée en ce que** le verrou (28) est couplé à une pièce de liaison (28.2) de l'élément d'actionnement (28.3) par l'intermédiaire d'un palier pivotant (28.1).

10. Trémie d'alimentation selon l'une des revendications 2 à 9, **caractérisée en ce qu'**il est prévu une pièce de support (28.7) avec un support (28.6) sur lequel l'unité de réglage (28.4) est fixée au moyen d'une fixation (28.5), **en ce que** la ou les pièces de maintien (27.1) sont fixées sur la pièce de support (28.7) ou le support (28.6), et **en ce que** le support (28.6) est relié de manière amovible ou non au support de machine (12.1).

11. Trémie d'alimentation selon l'une des revendications 1 à 10, **caractérisée en ce que** la paroi latérale (21) présente une paroi intérieure (21.1) tournée vers la zone d'alimentation et est équipée à l'arrière, sur le côté opposé à la paroi intérieure (21.1), d'une structure de renforcement avec au moins une entretoise de renforcement (21.4), et **en ce que** le levier de soutien (31) est fixé, de préférence soudé, à la structure de renforcement.

12. Trémie d'alimentation selon l'une des revendications 1 à 11, **caractérisée en ce que** la paroi arrière de trémie (22) présente des sections de bord latérales (22.6) qui, en position de travail, sont associées à des sections de bord (21.5) des parois latérales (21), **en ce que** des éléments de verrouillage (21.6) sont prévus dans la zone des sections de bord (21.5) des parois latérales (21) et des éléments de verrouillage (21.6) sont prévus dans la zone des sections de bord (22. 6) de la paroi arrière (22) de la trémie, des éléments de verrouillage antagonistes (22.7) sont disposés, **en ce que** les parois latérales (21) sont verrouillées dans la position de travail avec la paroi arrière (22) de la trémie au moyen des éléments de verrouillage (21.6) et des éléments de verrouillage antagonistes (22.7), et **en ce que** le levier d'appui (31) est disposé de préférence dans la zone de l'extrémité de la paroi latérale (21) qui est opposée à la section de bord (21.5).

13. Trémie d'alimentation selon l'une des revendications 1 à 10, **caractérisée en ce que** la paroi latérale (21) présente deux sections de palier (25, 26) qui sont disposées à distance l'une de l'autre et au moyen desquelles la paroi latérale (21) est raccordée de manière pivotante au support de machine (12.1) par l'intermédiaire de paliers pivotants (12.6, 12.9) et **en ce que** le levier d'appui (31) est disposé dans la zone située entre les deux sections de palier (26, 26).

14. Trémie d'alimentation selon l'une des revendications 1 à 13, **caractérisée en ce qu'**un actionneur (12.10), qui est de préférence formé par un vérin hydraulique et qui est raccordé d'un côté à un support (24.1) d'une section d'appui (24) de la paroi latérale (21) et de l'autre côté à un support (12.3) du support de machine (12.1), et **en ce que** la paroi latérale (21) peut être déplacée entre la position de transport et la position de travail au moyen de l'actionneur (12.10).
